# EUROPEAN PATENT APPLICATION

(11) **EP 4 496 397 A1**
(43) Date of publication of application: **22.01.2025**
(21) Application number: 23810753.6
(22) Date of filing: 27.04.2023
(51) Int. Cl.: H04W 64/00

(54) **POSITIONING METHOD, APPARATUS AND DEVICE, STORAGE MEDIUM, AND PROGRAM PRODUCT**

(30) Priority: 25.05.2022 CN 202210575105
(71) Applicant: ZTE Corporation, Shenzhen, Guangdong 518057 (CN)
(72) Inventor: ZHENG, Zheng, Shenzhen, Guangdong 518057 (CN); MAO, Huanhuan, Shenzhen, Guangdong 518057 (CN); LI, Ping, Shenzhen, Guangdong 518057 (CN); LIU, Huailin, Shenzhen, Guangdong 518057 (CN)
(74) Representative: Savi, Massimiliano
(86) International application number: PCT/CN2023/091289
(87) International publication number: WO 2023/226680

(57) **Abstract**

Embodiments of the application provide a positioning method, a positioning apparatus, a positioning system, a positioning device, a computer readable storage medium and a computer program product. The method comprises: acquiring parameter information of at least one intelligent reflecting surface and parameter information of a base station, wherein the at least one intelligent reflecting surface comprises a first intelligent reflecting surface; obtaining angle-of-arrival information corresponding to at least two signal transmission paths, wherein the at least two signal transmission paths comprise a first reflection path, and the first reflection path comprises a path for transmitting a signal between the base station and a target terminal by means of the first intelligent reflecting surface; and according to the parameter information of the intelligent reflecting surface, the parameter information of the base station, and the angle-of-arrival information corresponding to the at least two signal transmission paths, obtaining position information of the target terminal.

## Description

### CROSS-REFERENCE TO RELATED APPLICATION

This application is filed on the basis of Chinese patent application No. 202210575105.4 filed on May 25, 2022, and claims priority to the Chinese patent application, the entire contents of which are incorporated herein by reference.

### TECHNICAL FIELD

Embodiments of the present disclosure relate to the field of communication technologies, and more particularly, to a positioning method, apparatus, and device, a storage medium, and a program product.

### BACKGROUND

With the development of communication technologies, higher standards have been established for the positioning of User Equipment (UE) such as terminal devices. Positioning based on global satellite navigation systems offers more accurate outdoor positioning but has poor precision indoors.

Although existing technologies can improve indoor positioning accuracy through base stations, this requires a plurality of base stations to be precisely synchronized in time and to operate collaboratively, presenting significant challenges in practical applications. Therefore, how to perform accurate and effective positioning remains an urgent problem to be addressed.

### SUMMARY

According to embodiments of the present disclosure, a positioning method, a positioning apparatus, a positioning device, a computer-readable storage medium, and a computer program product are provided, so as to improve positioning feasibility and positioning precision.

In accordance with a first aspect of the present disclosure, an embodiment provides a positioning method. The method includes: acquiring parameter information of at least one Reconfigurable Intelligent Surface (RIS) and parameter information of a base station, where the at least one RIS includes a first RIS; acquiring Angle of Arrival (AOA) information corresponding to at least two signal transmission paths, where the at least two signal transmission paths include a first reflection path, the first reflection path including a path for signal transmission between the base station and a target terminal device via the first RIS; and obtaining location information of the target terminal device according to the parameter information of the RIS, the parameter information of the base station, and the AOA information corresponding to the at least two signal transmission paths.

In accordance with a second aspect of the present disclosure, an embodiment provides a positioning method. The method includes: acquiring parameter information of at least one RIS and parameter information of a base station, where the at least one RIS includes a first RIS; sending a positioning signal, the positioning signal being transmitted to a target terminal device through at least two signal transmission paths, where the at least two signal transmission paths include a first reflection path, the first reflection path including a path for signal transmission between the base station and the target terminal device via the first RIS; acquiring AOA information corresponding to the at least two signal transmission paths, where the AOA information corresponding to the at least two signal transmission paths includes AOA information of the first reflection path; and obtaining location information of the target terminal device according to the parameter information of the RIS, the parameter information of the base station, and the AOA information of the at least two signal transmission paths.

In accordance with a third aspect of the present disclosure, an embodiment provides a positioning method. The method includes: acquiring parameter information of at least one RIS and parameter information of a base station, where the at least one RIS includes a first RIS; receiving a positioning signal, the positioning signal being from at least two signal transmission paths, where the at least two signal transmission paths include a first reflection path, the first reflection path including a path for signal transmission between the base station and a target terminal device via the first RIS; acquiring AOA information corresponding to the at least two signal transmission paths, where the AOA information corresponding to the at least two signal transmission paths includes AOA information of the first reflection path; and obtaining location information of the terminal device according to the parameter information of the RIS, the parameter information of the base station, and the AOA information corresponding to the at least two signal transmission paths.

In accordance with a fourth aspect of the present disclosure, an embodiment provides a positioning method. The method includes: acquiring, by a server, parameter information of at least one RIS and parameter information of a base station, where the at least one RIS includes a first RIS; sending, by the base station, a positioning signal, the positioning signal being transmitted to a terminal device through at least two signal transmission paths, where the at least two signal transmission paths include a first reflection path, the first reflection path including a path for signal transmission between the base station and a target terminal device via the first RIS; receiving, by the terminal device, the positioning signal; calculating, by the base station or the terminal device, AOA information corresponding to the at least two signal transmission paths; and obtaining, by the server, location information of the terminal device according to the parameter information of the RIS, the parameter information of the base station, and the AOA information corresponding to the at least two signal transmission paths.

In accordance with a fifth aspect of the present disclosure, an embodiment provides a positioning apparatus. The apparatus includes: an acquisition module configured to acquire the following information: parameter information of at least one RIS and parameter information of a base station, where the at least one RIS includes a first RIS; and AOA information corresponding to at least two signal transmission paths, where the at least two signal transmission paths include a first reflection path, the first reflection path including a path for signal transmission between the base station and a target terminal device via the first RIS; and a processing module configured to obtain location information of the target terminal device according to the parameter information of the RIS, the parameter information of the base station, and the AOA information corresponding to the at least two signal transmission paths.

In accordance with a sixth aspect of the present disclosure, an embodiment provides a positioning apparatus. The apparatus includes: an acquisition module configured to acquire the following information: parameter information of at least one RIS and parameter information of a base station, where the at least one RIS includes a first RIS; and AOA information corresponding to at least two signal transmission paths, where the AOA information corresponding to the at least two signal transmission paths includes AOA information of the first reflection path; a sending module configured to send a positioning signal, the positioning signal being transmitted to a target terminal device through the at least two signal transmission paths, where the at least two signal transmission paths include a first reflection path, the first reflection path including a path for signal transmission between the base station and the target terminal device via the first RIS; and a processing module configured to obtain location information of the target terminal device according to the parameter information of the RIS, the parameter information of the base station, and the AOA information corresponding to the at least two signal transmission paths.

In accordance with a seventh aspect of the present disclosure, an embodiment provides a positioning apparatus. The apparatus includes: an acquisition module configured to acquire the following information: parameter information of at least one RIS and parameter information of a base station, where the at least one RIS includes a first RIS; and AOA information corresponding to at least two signal transmission paths, where the AOA information corresponding to the at least two signal transmission paths includes AOA information of the first reflection path; a receiving module configured to receive a positioning signal, the positioning signal being from the at least two signal transmission paths, where the at least two signal transmission paths include a first reflection path, the first reflection path including a path for signal transmission between the base station and a target terminal device via the first RIS; and a processing module configured to obtain location information of the terminal device according to the parameter information of the RIS, the parameter information of the base station, and the AOA information corresponding to the at least two signal transmission paths.

In accordance with an eighth aspect of the present disclosure, an embodiment provides a positioning device, including: a memory, a processor, and a computer program stored in the memory and executable by the processor which, when executed by the processor, causes the processor to implement any method in the above first, second, third or fourth aspect.

In accordance with a ninth aspect of the present disclosure, an embodiment provides a computer-readable storage medium, storing computer-executable instructions which, when executed by a processor, cause the processor to perform any method in the above first, second, third or fourth aspect.

In accordance with a tenth aspect of the present disclosure, an embodiment provides a computer program product, including a computer program or computer instructions stored in a computer-readable storage medium, where a processor of a computer device reads the computer program or the computer instructions from the computer-readable storage medium which, when executed by the processor, causes the computer device to implement any method in the above first, second, third or fourth aspect.

### BRIEF DESCRIPTION OF DRAWINGS

FIG. 1 is a schematic diagram of positioning of a user terminal device by a global positioning system (GPS);
FIG. 2 is a schematic diagram of a user terminal device in an indoor scenario such as a shopping mall or an underground parking lot;
FIG. 3 is a schematic diagram of positioning of the user terminal device through collaboration of a plurality of base stations;
FIG. 4 is a schematic diagram of architecture of a positioning system according to an embodiment of the present disclosure;
FIG. 5 is a flowchart of a positioning method according to an embodiment of the present disclosure;
FIG. 6 is a flowchart of a positioning method according to an embodiment of the present disclosure;
FIG. 7 is a schematic diagram of architecture of a positioning system according to an embodiment of the present disclosure;
FIG. 8 is a schematic diagram of architecture of a positioning system according to an embodiment of the present disclosure;
FIG. 9 is a flowchart of a positioning method according to an embodiment of the present disclosure;
FIG. 10 is a schematic diagram of architecture of a positioning system according to an embodiment of the present disclosure;
FIG. 11 is a schematic diagram of architecture of a positioning system according to an embodiment of the present disclosure;
FIG. 12 is a flowchart of a positioning method according to an embodiment of the present disclosure;
FIG. 13 is a schematic diagram of a positioning apparatus according to an embodiment of the present disclosure;
FIG. 14 is a schematic diagram of a positioning apparatus according to an embodiment of the present disclosure;
FIG. 15 is a schematic diagram of a positioning apparatus according to an embodiment of the present disclosure;
FIG. 16 is a schematic diagram of a positioning device according to an embodiment of the present disclosure;
FIG. 17 is a schematic diagram of an application scenario according to an embodiment of the present disclosure; and
FIG. 18 is a schematic diagram of an application scenario according to another embodiment of the present disclosure.

### DETAILED DESCRIPTION

In order to make the objectives, technical schemes, and advantages of the present disclosure clear, the present disclosure will be described in further detail below in conjunction with the accompanying drawings and embodiments. It should be understood that specific embodiments described here are only used to illustrate the present disclosure and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the description of the embodiments of the present disclosure, unless otherwise explicitly limited, words such as "arrange", "install", and "connect" should be understood in a broad sense. Those having ordinary skills in the art can reasonably determine meanings of the above words in the embodiments of the present disclosure based on specific content of the technical schemes. In the embodiments of the present disclosure, words such as "further", "exemplarily", and "optionally" are used as examples, illustrations, or descriptions and should not be construed as being more preferable or advantageous over other embodiments or design schemes. The use of the words "further," "exemplarily," and "optionally" is intended to present relevant concepts in a specific manner.

The embodiments of the present disclosure may be applied to various communications systems, such as, a Global System of Mobile communication (GSM) system, a Code Division Multiple Access (CDMA) system, a Wideband Code Division Multiple Access (WCDMA) system, a General Packet wireless Service (GPRS) system, a Long Term Evolution (LTE) system, an Advanced long term evolution (LTE-A) system, a Universal Mobile Telecommunication System (UMTS) system, a 5G system, a Beyond Fifth Generation (B5G) system, and a 6th Generation (6G) system, which are not limited in the embodiments of the present disclosure.

A target terminal device in the embodiments of the present disclosure may be a device capable of communicating with a base station. The target terminal device may be any device with a wireless receiving and transmitting function, which includes, but not limited to, a mobile phone, a tablet computer, a mobile computer, an electronic bracelet, an electronic watch, a smart wearable device, a smart car, and the like, which is not limited in the embodiments of the present disclosure.

The base station in the embodiments of the present disclosure may be a device capable of communicating with the target terminal device. The base station may be any device with a wireless receiving and transmitting function, which includes, but not limited to, a NodeB, an evolved base station (eNodeB), a base station in a 5G communication system, a base station in a future communication system, an access node, a wireless relay node, or a wireless backhaul node in a Wi-Fi system, or the like. The base station may alternatively be a radio controller in a Cloud Radio Access Network (CRAN) scenario. The base station may alternatively be a small station, a Transmission Reference Point (TRP), or the like, which is not limited in the embodiments of the present disclosure.

At present, positioning of the target terminal device mainly depends on a satellite navigation system. Through the satellite navigation system, an outdoor/outdoor target terminal device can be accurately positioned. However, when the target terminal device is located in an indoor environment, it is difficult to obtain location information of the target terminal device by relying on the satellite navigation system, that is, the positioning of the target terminal device cannot be implemented.

In order to elaborate on the technical scheme, positioning methods in related technologies are further described based on a GPS and a User Equipment (UE).

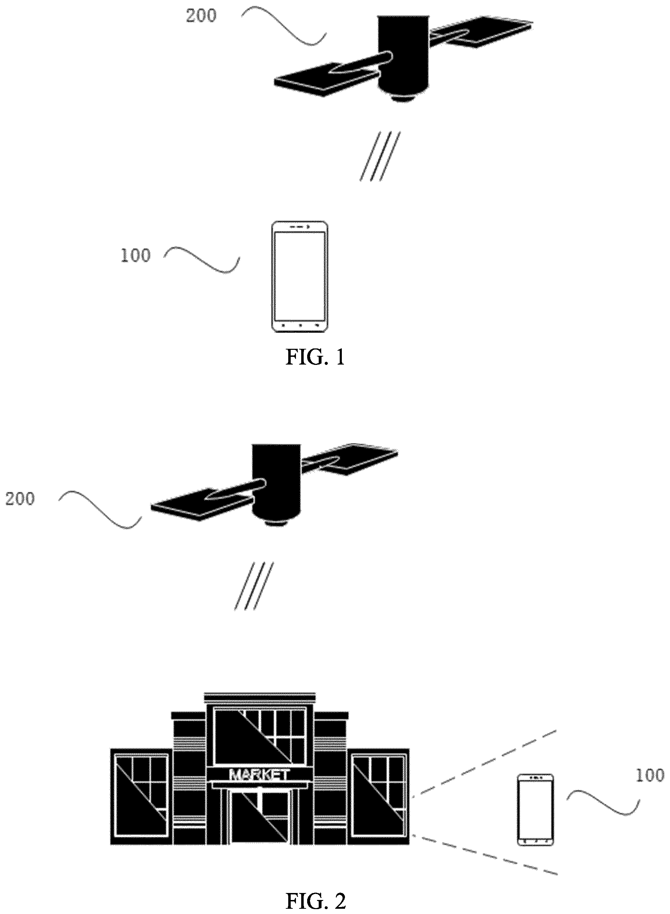

FIG. 1 is a schematic diagram of positioning of a UE by a GPS. As shown in FIG. 1, a UE 100 is in an outdoor environment and can receive a signal from a GPS 200. The UE 100 is positioned using a ranging intersection method through a positioning signal.

FIG. 2 is a schematic diagram of a UE in an indoor scenario such as a shopping mall or an underground parking lot. As shown in FIG. 2, the UE 100 is in an indoor environment and can hardly receive a positioning signal from the GPS 200, so it is difficult to acquire location information of the UE 100.

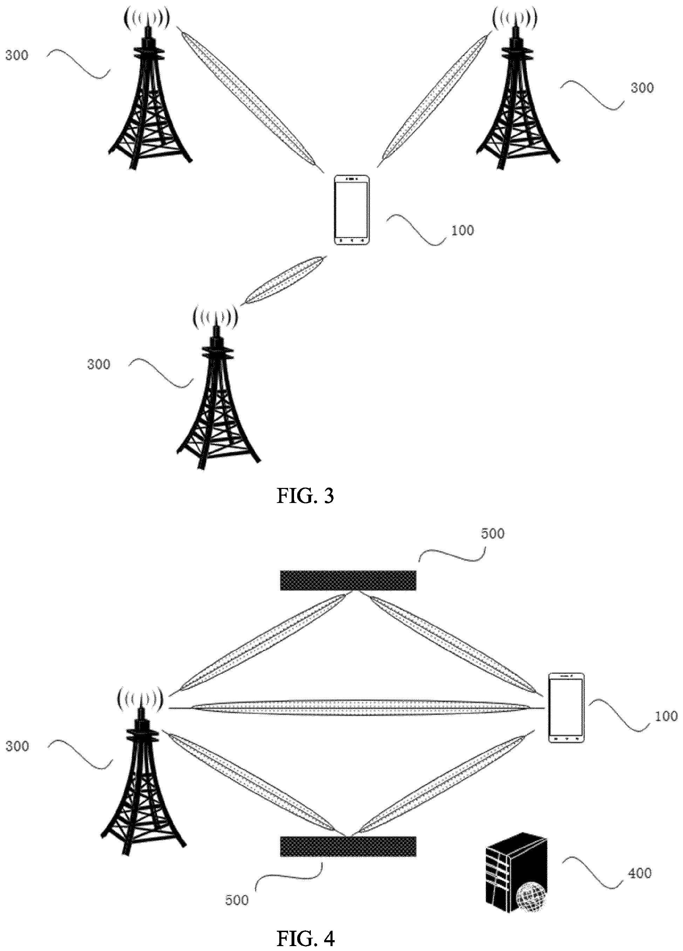

FIG. 3 is a schematic diagram of positioning of the UE through collaboration of a plurality of base stations. As shown in FIG. 3, in order to make up for the deficiency that it is difficult for the satellite navigation system to position an indoor UE, the UE is positioned through collaboration of a plurality of base stations in the existing technology. In this positioning method, although the indoor UE can be positioned, a plurality of base stations, for example, three base stations 300 shown in FIG. 3 need to collaboratively operate, and are required to be accurately synchronized in time. In order to realize accurate positioning of the indoor UE, the three base stations 300 and the UE 100 are required to be in a Line of Sight (LOS) environment. As can be seen, there are strict conditions on the positioning of the UE through collaboration of the plurality of base stations, which cannot be all met in an actual cellular network.

According to embodiments of the present disclosure, a positioning method, a positioning apparatus, a positioning system, a positioning device, a computer-readable storage medium, and a computer program product are provided. Positioning information of a target terminal device is obtained by analyzing AOAs between the target terminal device and a base station, and between the target terminal device and a RIS, which can realize positioning of the target terminal device in an indoor environment and can also reduce a condition for obtaining the positioning information and improve positioning accuracy.

The embodiments of the present disclosure are further described below in conjunction with the accompanying drawings.

FIG. 4 is a schematic diagram of architecture of a system for performing a target terminal device positioning method according to an embodiment of the present disclosure. As shown in FIG. 4, the architecture of the positioning system includes a target terminal device such as a UE 100, a base station 300, a RIS 500, and a Location Management Function (LMF) apparatus.

The UE 100, i.e., a target terminal device to be positioned, can communicate with the base station 300 and the RIS 500.

The base station 300 can communicate with the UE 100 and the RIS 500 in a wired or wireless manner.

The RIS 500, also called an intelligent metasurface, includes an array of intelligent reflecting units. Each intelligent reflecting unit can independently change an incident signal to some extent. The RIS 500 can intelligently adjust a wireless network environment and improve coverage performance of the wireless communication network by integrating a number of passive reflecting units on a plane and adjusting phases of the reflecting units, and is featured by low power consumption and easy deployment. The number of the RIS(s) 500 may be one or more.

The LMF apparatus, also called a positioning management function apparatus, can be disposed in a positioning server 400 or integrated in the UE 100 or the base station 300.

When there is a LOS path between the base station 300 and the UE 100, the positioning server 400 may obtain location information of the UE 100 by acquiring location information of the base station 300 and the RIS 500, AOA information of the UE 100 relative to the RIS 500, and AOA information of the UE 100 relative to the base station 300.

When there is no LOS path between the base station 300 and the UE 100, that is, in a non-LOS path environment, the positioning server 400 may obtain location information of the UE 100 by acquiring location information of the base station 300 and the RIS 500 and AOA information of the UE 100 relative to at least two RISs 500.

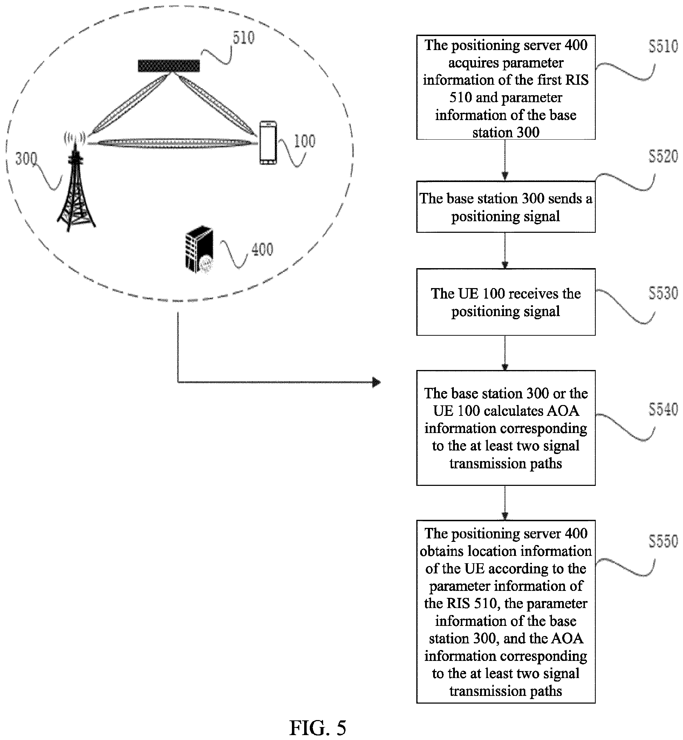

FIG. 5 is a flowchart of a positioning method according to an embodiment of the present disclosure. As shown in FIG. 5, the positioning method is applied to a positioning system including a UE 100, a base station 300, a positioning server 400 provided with an LMF apparatus, and a first RIS 510. The positioning method may include, but not limited to, steps S510, S520, S530, S540, and S550.

At S510, the positioning server 400 acquires parameter information of the first RIS 510 and parameter information of the base station 300.

At S520, the base station 300 sends a positioning signal. The positioning signal is transmitted to the UE 100 through at least two signal transmission paths. The at least two signal transmission paths include a first reflection path. The first reflection path includes a path for signal transmission between the base station 300 and the UE 100 via the first RIS 510.

For example, the positioning signal sent by the base station 300 is transmitted to the UE 100 through the first reflection path and a LOS path respectively. The first reflection path includes a transmission path passing through the base station 300, the first RIS 510, and the UE 100. The positioning signal can be sent from the base station 300 along the first reflection path, pass through the first RIS 510, and then reach the UE 100. It may be understood that the positioning signal can alternatively be sent from the UE 100 along the first reflection path, pass through the first RIS 510, and then reach the base station 300. The LOS path includes a transmission path directly passing through the base station 300 and the UE 100. The positioning signal can be sent from the base station 300 along the LOS path and directly transmitted to the UE 100. It may be understood that the positioning signal can alternatively be sent from the UE 100 along the LOS path and directly transmitted to the base station 300.

In an embodiment, the UE 100 sends a positioning signal. The positioning signal is transmitted to the base station 300 through at least two signal transmission paths.

At S530, the UE 100 receives the positioning signal.

In an embodiment, the base station 300 receives the positioning signal.

At S540, the base station 300 or the UE 100 calculates AOA information corresponding to the at least two signal transmission paths.

For example, the positioning signal sent by the base station 300 is transmitted to the UE 100 through the first reflection path and the LOS path respectively. The base station 300 or the UE 100 calculates AOA information corresponding to the first reflection path and AOA information corresponding to the LOS path.

At S550, the positioning server 400 obtains location information of the UE according to the parameter information of the RIS 510, the parameter information of the base station 300, and the AOA information corresponding to the at least two signal transmission paths.

For example, the positioning server 400 obtains location information of the UE 100 according to the parameter information of the RIS 510, the parameter information of the base station 300, the AOA information corresponding to the first reflection path, and the AOA information corresponding to the LOS path.

This embodiment provides a positioning method, in which a target terminal device can be positioned through a base station and a RIS. The positioning method can be applied to indoor scenarios, does not require collaborative operation of a plurality of base stations, and can achieve high-precision positioning.

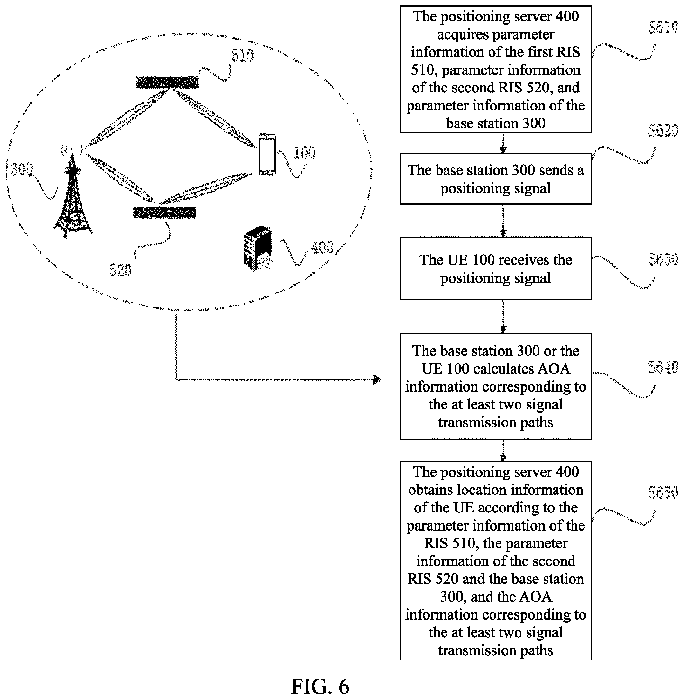

FIG. 6 is a flowchart of a positioning method according to an embodiment of the present disclosure. As shown in FIG. 6, the positioning method is applied to a positioning system including a UE 100, a base station 300, a positioning server 400 provided with an LMF apparatus, a first RIS 510, and a second RIS 520. The positioning method may include, but not limited to, steps S610, S620, S630, S640, and S650.

At S610, the positioning server 400 acquires parameter information of the first RIS 510, parameter information of the second RIS 520, and parameter information of the base station 300.

At S620, the base station 300 sends a positioning signal. The positioning signal is transmitted to the UE 100 through at least two signal transmission paths. The at least two signal transmission paths include a first reflection path and a second reflection path. The first reflection path includes a path for signal transmission between the base station 300 and the UE 100 via the first RIS 510. The second reflection path includes a path for signal transmission between the base station 300 and the UE 100 via the second RIS 520.

For example, the positioning signal sent by the base station 300 is transmitted to the UE 100 through the first reflection path and a non-LOS path respectively. The first reflection path includes a transmission path passing through the base station 300, the first RIS 510, and the UE 100. The positioning signal can be sent from the base station 300 along the first reflection path, pass through the first RIS 510, and then reach the UE 100. It may be understood that the positioning signal can alternatively be sent from the UE 100 along the first reflection path, pass through the first RIS 510, and then reach the base station 300. The non-LOS path, for example, the second reflection path, includes a transmission path passing through the base station 300, the second RIS 520, and the UE 100. The positioning signal can be sent from the base station 300 along the second reflection path, pass through the second RIS 520, and then reach the UE 100. It may be understood that the positioning signal can alternatively be sent from the UE 100 along the second reflection path, pass through the second RIS 520, and then reach the base station 300.

In an embodiment, the UE 100 sends a positioning signal. The positioning signal is transmitted to the base station 300 through at least two signal transmission paths. The at least two signal transmission paths include a first reflection path and a second reflection path.

At S630, the UE 100 receives the positioning signal.

In an embodiment, the base station 300 receives the positioning signal.

At S640, the base station 300 or the UE 100 calculates AOA information corresponding to the at least two signal transmission paths.

For example, the positioning signal sent by the base station 300 is transmitted to the UE 100 through the first reflection path and the non-LOS path respectively. The base station 300 or the UE 100 calculates AOA information corresponding to the first reflection path and AOA information corresponding to the non-LOS path.

At S650, the positioning server 400 obtains location information of the UE according to the parameter information of the RIS 510, the parameter information of the second RIS 520 and the base station 300, and the AOA information corresponding to the at least two signal transmission paths.

For example, the positioning server 400 obtains location information of the UE 100 according to the parameter information of the RIS 510, the parameter information of the base station 300, the AOA information corresponding to the first reflection path, and AOA information corresponding to the second reflection path.

This embodiment provides a positioning method, in which a target terminal device can be positioned through a base station and two RISs. The positioning method can be applied to indoor scenarios and non-LOS environments, does not require collaborative operation of a plurality of base stations, and can achieve high-precision positioning

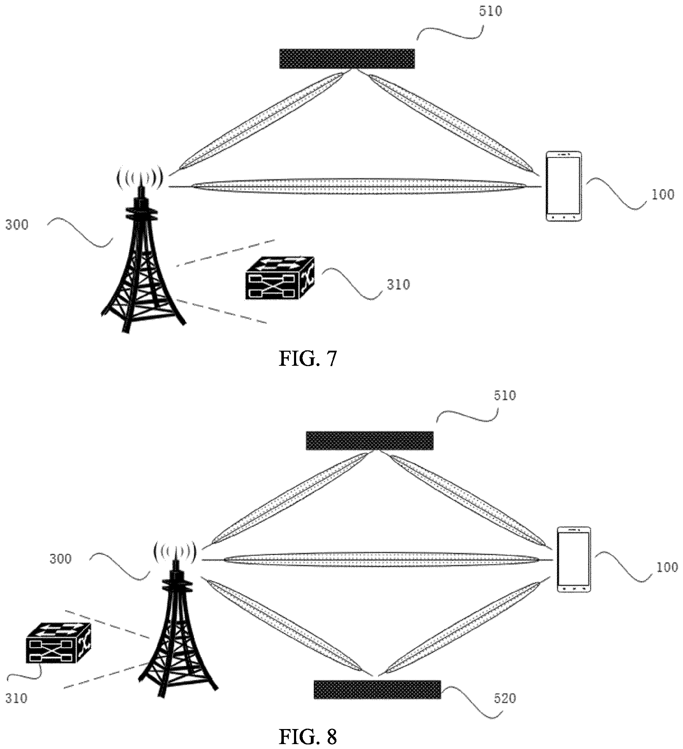

FIG. 7 is a schematic diagram of architecture of a system for performing a target terminal device positioning method according to an embodiment of the present disclosure. As shown in FIG. 7, the architecture of the positioning system includes a target terminal device such as a UE 100, a first RIS 510, and a base station 300 including an LMF apparatus 310.

FIG. 8 is a schematic diagram of architecture of a system for performing a target terminal device positioning method according to an embodiment of the present disclosure. As shown in FIG. 8, the architecture of the positioning system includes a target terminal device such as a UE 100, a first RIS 510, a second RIS 520, and a base station 300 including an LMF apparatus 310.

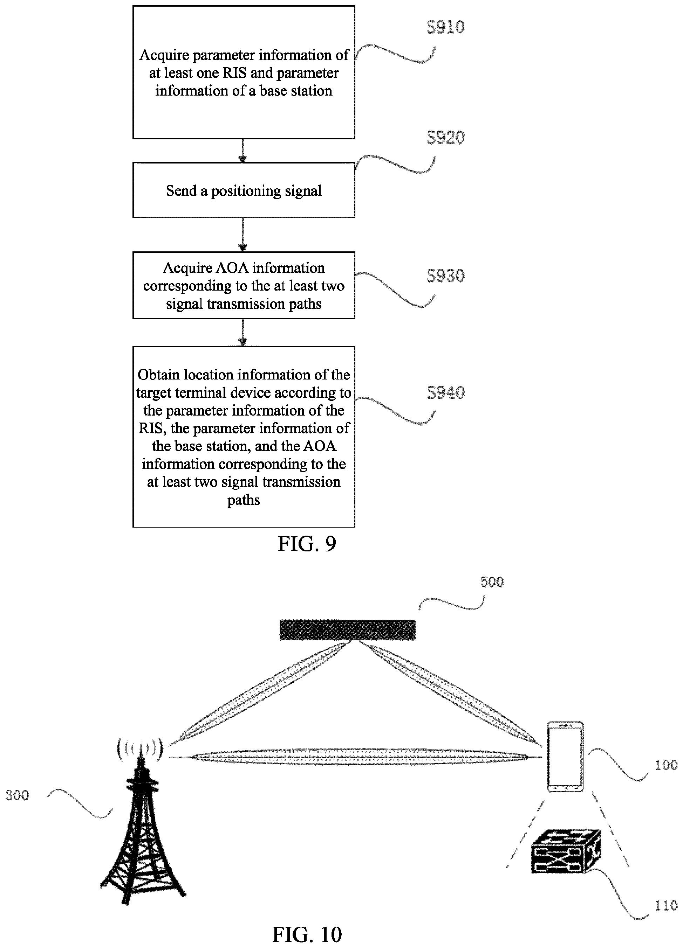

FIG. 9 is a flowchart of a positioning method according to an embodiment of the present disclosure. As shown in FIG. 9, the positioning method may be applied to the base station 300 shown in FIG. 7 or FIG. 8. The positioning method may include, but not limited to, steps S910, S920, S930, and S940.

At S910, parameter information of at least one RIS and parameter information of a base station are acquired.

In an embodiment, the at least one RIS includes a first RIS 510.

In another embodiment, the at least one RIS includes a first RIS 510 and a second RIS 520.

In an embodiment, the parameter information of the RIS may include array configuration information of the RIS and may further include geographical location information of the RIS. The array configuration information may include at least one of: a number of horizontal elements, a number of vertical elements, an element spacing, a number of quantization bits, and the like. The geographical location information may include GPS coordinates, latitude and longitude coordinates, an altitude, an orientation, a downward inclination angle, location information of a geocentric rectangular coordinate system, location information of a geodetic coordinate system, and the like.

In an embodiment, the parameter information of the base station may include geographical location information of the base station. The geographical location information may include GPS coordinates, latitude and longitude coordinates, an altitude, an orientation, a downward inclination angle, location information of a geocentric rectangular coordinate system, location information of a geodetic coordinate system, and the like.

In an embodiment, after S910, a step S911 is further included, in which a target paired beam between the base station and the RIS, i.e., a codebook of an optimal paired beam or an optimal beam, is obtained according to the parameter information of the RIS and the parameter information of the base station.

For example, the base station 300 calculates an optimal paired beam between the base station and the first RIS 510 according to the parameter information of the first RIS 510 and the base station 300. In another example, the base station 300 calculates an optimal paired beam between the base station and the first RIS 510 and an optimal paired beam between the base station and the second RIS 520 according to the parameter information of the first RIS 510, the second RIS 520, and the base station 300.

In another embodiment, after S910, a step S912 is further included, in which beam training is performed on a target terminal device to obtain a target paired beam between the base station and the target terminal device, and a target paired beam among the base station, the RIS, and the target terminal device.

For example, the base station 300 performs beam training on the UE 100 to obtain a target paired beam between the base station 300 and the UE 100, and a target paired beam among the base station 300, the first RIS 510/the second RIS 520, and the UE 100.

At S920, a positioning signal is sent.

In an embodiment, the positioning signal is transmitted to the target terminal device through at least two signal transmission paths. The at least two signal transmission paths include a first reflection path and a LOS path. The first reflection path includes a path for signal transmission between the base station 300 and the UE 100 via the first RIS 510. The positioning signal can be sent from the base station 300 along the first reflection path, pass through the first RIS 510, and then reach the UE 100. It may be understood that the positioning signal can alternatively be sent from the UE 100 along the first reflection path, pass through the first RIS 510, and then reach the base station 300. The LOS path includes a transmission path directly passing through the base station 300 and the UE 100. The positioning signal can be sent from the base station 300 and directly transmitted to the UE 100 along the LOS path. It may be understood that the positioning signal can alternatively be sent from the UE 100 and directly transmitted to the base station 300 along the LOS path.

In an embodiment, the positioning signal is transmitted to the target terminal device through at least two signal transmission paths. The at least two signal transmission paths include a first reflection path and a second reflection path. The first reflection path includes a path for signal transmission between the base station 300 and the UE 100 via the first RIS 510. The second reflection path includes a path for signal transmission between the base station 300 and the UE 100 via the second RIS 520.

At S930, AOA information corresponding to the at least two signal transmission paths is acquired.

In an embodiment, the AOA information corresponding to the at least two signal transmission paths includes AOA information of the first reflection path and AOA information of the LOS path.

For example, the AOA information corresponding to the at least two signal transmission paths includes AOA information corresponding to the first reflection path and AOA information corresponding to the LOS path. The AOA information corresponding to the first reflection path is AOA information of the UE 100 relative to the first RIS 510. The AOA information corresponding to the LOS path is AOA information of the UE 100 relative to the base station 300.

In another embodiment, the AOA information corresponding to the at least two signal transmission paths includes AOA information corresponding to the first reflection path and AOA information corresponding to the second reflection path.

For example, the AOA information corresponding to the at least two signal transmission paths includes AOA information corresponding to the first reflection path and AOA information corresponding to the second reflection path. The AOA information corresponding to the first reflection path is AOA information of the UE 100 relative to the first RIS 510. The AOA information corresponding to the second reflection path is AOA information of the UE 100 relative to the second RIS 520.

At S940, location information of the target terminal device is obtained according to the parameter information of the RIS, the parameter information of the base station, and the AOA information corresponding to the at least two signal transmission paths.

In an embodiment, location information of the UE 100 is obtained according to the parameter information of the RIS 510, the parameter information of the base station 300, the AOA information of the UE 100 relative to the first RIS 510, and the AOA information of the UE 100 relative to the base station 300.

In another embodiment, location information of the UE 100 is obtained according to the parameter information of the RIS 510, the parameter information of the second RIS 520, the parameter information of the base station 300, the AOA information of the UE 100 relative to the first RIS 510, and the AOA information of the UE 100 relative to the second RIS 520.

FIG. 10 is a schematic diagram of architecture of a system for performing a target terminal device positioning method according to an embodiment of the present disclosure. As shown in FIG. 10, the architecture of the positioning system includes a base station 300, a first RIS 510, and a target terminal device including an LMF apparatus 310, such as a UE 100.

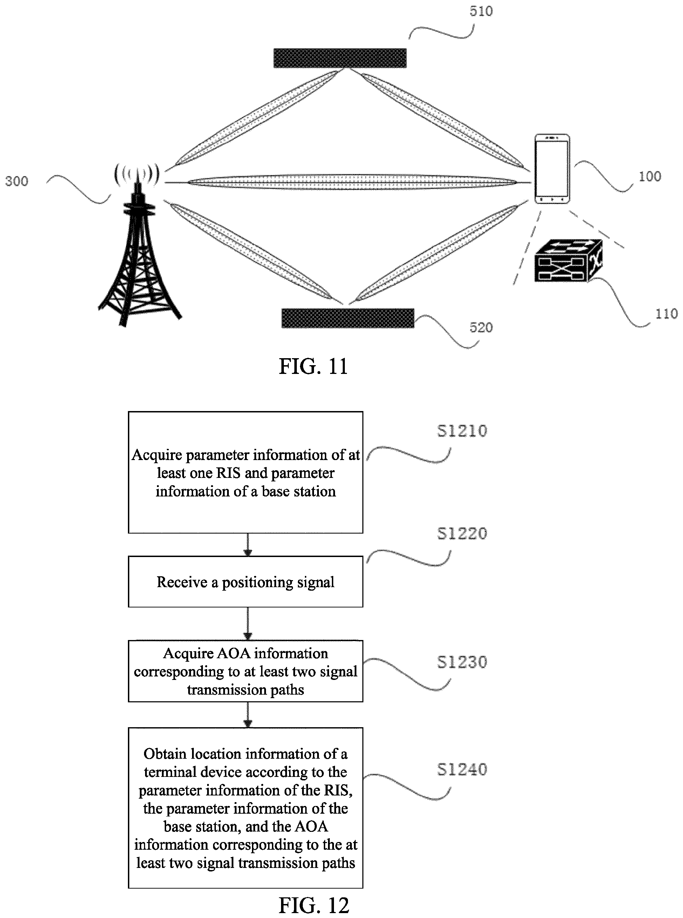

FIG. 11 is a schematic diagram of architecture of a system for performing a target terminal device positioning method according to an embodiment of the present disclosure. As shown in FIG. 11, the architecture of the positioning system includes a base station 300, a first RIS 510, a second RIS 520, and a target terminal device including an LMF apparatus 310, such as a UE 100.

FIG. 12 is a flowchart of a positioning method according to an embodiment of the present disclosure. As shown in FIG. 12, the positioning method may be applied to the UE 100 shown in FIG. 10 or FIG. 11. The positioning method may include, but not limited to, steps S1210, S1220, S1230, and S1240.

At S 1210, parameter information of at least one RIS and parameter information of a base station are acquired.

At S1220, a positioning signal is received.

In an embodiment, the positioning signal may be a Sounding Reference Signal (SRS) or a Sounding Reference Signal for Positioning (SRS-Pos).

At S1230, AOA information corresponding to at least two signal transmission paths is acquired.

At S 1240, location information of a terminal device is obtained according to the parameter information of the RIS, the parameter information of the base station, and the AOA information corresponding to the at least two signal transmission paths.

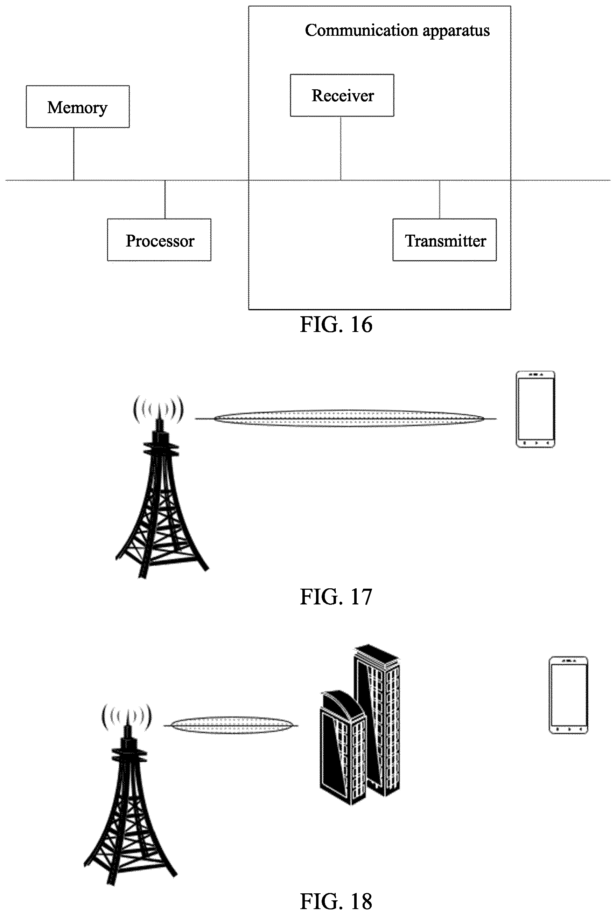

In the positioning method according to this embodiment of the present disclosure, high-precision positioning of the UE can be realized only with a base station and at least one RIS. As shown in FIG. 17, when there is a LOS environment between the base station and the UE, the UE is positioned through at least one RIS. As shown in FIG. 18, when there is a non-LOS environment between the base station and the UE, that is, there are buildings and other facilities that block straight transmission of signals between the base station and the UE, the UE is positioned through at least two RISs. In order to facilitate understanding of the technical schemes of the present disclosure, the schemes of the present disclosure are further elaborated through the following embodiments.

The base station operates, and the RIS starts.

The RIS is connected to the base station in a wired or wireless manner and communicates with the base station.

Each RIS reports its parameter information such as array configuration information, geographical location information, and the like.

After receiving the array configuration information and the geographical location information of the RIS, the base station maintains a RIS information table of a serving cell.

The base station calculates a codebook of an optimal beam for the base station and each RIS according to the parameter information of the RIS and the parameter information of the base station.

The base station reports the parameter information of the base station and the RIS to an LMF apparatus or a location management unit.

The LMF apparatus or the location management unit allocates configuration resources of at least one RIS to the base station.

The UE starts and is connected to a local cell or the UE moves to the local cell and switches to a local cell service.

The base station performs beam training on the UE to obtain an optimal paired beam between the base station and the UE, and an optimal paired beam among the base station, the RIS, and the UE. In an embodiment, the UE is an R16 UE, the base station informs the UE of Positioning Reference Signal (PRS) and SRS-Pos configuration, and the LMF apparatus provides the PRS and SRS-Pos configuration of the base station.

The base station determines whether there is a LOS path between the base station and the UE and whether a number of the RIS(s) is greater than or equal to 1.

### Example A:

When there is a LOS path between the base station and the UE and the number of the RIS(s) is greater than or equal to 1, the following method is performed. The base station or the UE calculates AOAs corresponding to the LOS path and a reflection path via the RIS respectively, which are denoted as (θ0, ϕ0) and (θ1, ϕ1) respectively.

The LMF apparatus receives an AOA of the UE relative to the base station and an AOA of the UE relative to each RIS.

The LMF apparatus calculates coordinates of the UE according to two or more AOAs to realize positioning of the UE.

### Example B:

When there is no LOS path between the base station and the UE and the number of the RIS(s) is greater than or equal to 1, the following method is performed.

The base station or the UE calculates AOAs corresponding to reflection paths via at least two RISs respectively, which are denoted as (θ1, ϕ1) and (θ2, ϕ2) respectively.

The LMF apparatus receives an AOA of the UE relative to each RIS.

The LMF apparatus calculates coordinates of the UE according to two or more AOAs to realize positioning of the UE.

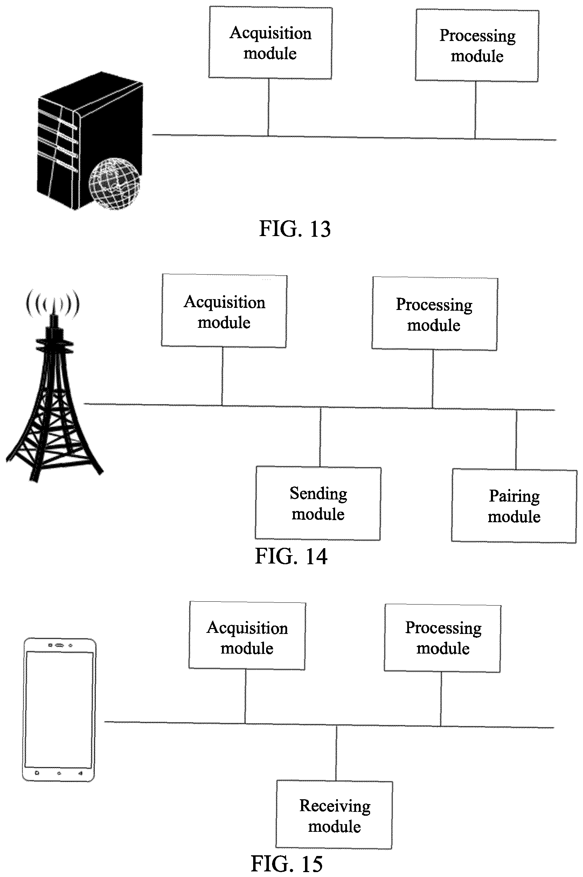

FIG. 13 is a schematic diagram of a positioning apparatus according to an embodiment of the present disclosure. As shown in FIG. 13, the positioning apparatus may include an acquisition module and a processing module.

The acquisition module is configured to acquire the following information: parameter information of at least one RIS and parameter information of a base station, where the at least one RIS includes a first RIS; and AOA information corresponding to at least two signal transmission paths, where the AOA information corresponding to at least two signal transmission paths includes AOA information of a first reflection path.

The processing module is configured to obtain location information of the target terminal device according to the parameter information of the RIS, the parameter information of the base station, and the AOA information corresponding to the at least two signal transmission paths.

FIG. 14 is a schematic diagram of a positioning apparatus according to an embodiment of the present disclosure. As shown in FIG. 14, the positioning apparatus may include an acquisition module, a sending module, and a processing module.

The acquisition module is configured to acquire the following information: parameter information of at least one RIS and parameter information of a base station, where the at least one RIS includes a first RIS; and AOA information corresponding to at least two signal transmission paths, where the AOA information corresponding to at least two signal transmission paths includes AOA information of a first reflection path.

The sending module is configured to send a positioning signal. The positioning signal is transmitted to a target terminal device through at least two signal transmission paths. The at least two signal transmission paths include the first reflection path. The first reflection path includes a path for signal transmission between the base station and the target terminal device via the first RIS.

The processing module is configured to obtain location information of the target terminal device according to the parameter information of the RIS, the parameter information of the base station, and the AOA information corresponding to the at least two signal transmission paths.

In an embodiment, the positioning apparatus further includes a pairing module configured to perform at least one of the following: obtaining a target paired beam between the base station and the RIS according to the parameter information of the RIS and the parameter information of the base station; and performing beam training on the target terminal device to obtain a target paired beam between the base station and the target terminal device, and a target paired beam among the base station, the RIS, and the target terminal device.

FIG. 15 is a schematic diagram of a positioning apparatus according to an embodiment of the present disclosure. As shown in FIG. 15, the positioning apparatus may include an acquisition module, a sending module, and a processing module.

The acquisition module is configured to acquire the following information: parameter information of at least one RIS and parameter information of a base station, where the at least one RIS includes a first RIS; and AOA information corresponding to at least two signal transmission paths, where the AOA information corresponding to at least two signal transmission paths includes AOA information of a first reflection path.

The receiving module is configured to receive a positioning signal. The positioning signal is from at least two signal transmission paths. The at least two signal transmission paths include the first reflection path. The first reflection path includes a path for signal transmission between the base station and a target terminal device via the first RIS.

The processing module is configured to obtain location information of the target terminal device according to the parameter information of the RIS, the parameter information of the base station, and the AOA information corresponding to the at least two signal transmission paths.

FIG. 16 is a schematic structural diagram of a positioning device according to an embodiment of the present disclosure. As shown in FIG. 16, the device includes a memory, a processor, and a communication apparatus. One or more memories and one or more processors may be provided. In FIG. 16, for example, one memory and one processor are provided. The memory and the processor in the device may be connected through a bus or in other manners.

The memory, as a computer-readable storage medium, may be configured to store software programs, computer-executable programs, and modules, such as program instructions/modules corresponding to the positioning method provided in any one of the embodiments of the present disclosure. The processor implements the above positioning method by running the software programs, instructions, and modules stored in the memory.

The memory may mainly include a program storage region and a data storage region. The program storage region may store an operating system and an application program required by at least one function. In addition, the memory may include a high-speed random-access memory and may further include a non-volatile memory, such as at least one disk memory, a flash memory, or another non-volatile solid-state memory. In some examples, the memory may further include memories located remotely relative to the processor, and these remote memories may be connected to the device via a network. Examples of the network include, but not limited to, the Internet, an intranet, a local area network, a mobile communication network, and combinations thereof.

The communication apparatus is configured to perform information receiving and transmitting communication according to control of the processor.

In an embodiment, the communication apparatus includes a receiver and a transmitter. The receiver is a combination of modules or devices in an electronic device that receive data. The transmitter is a combination of modules or devices in an electronic device that transmit data.

An embodiment of the present disclosure provides a computer-readable storage medium, storing computer-executable instructions which, when executed by a processor, cause the processor to implement the positioning method as provided in any one of the embodiments of the present disclosure.

An embodiment of the present disclosure provides a computer program product, including a computer program or computer instructions stored in a computer-readable storage medium. A processor of a computer device reads the computer program or the computer instructions from the computer-readable storage medium which, when executed by the processor, causes the processor to implement the positioning method as provided in any one of the embodiments of the present disclosure.

The system architecture and the application scenario described in the embodiments of the present disclosure are intended to illustrate the technical schemes of the embodiments of the present disclosure more clearly and do not constitute a limitation on the technical schemes provided in the embodiments of the present disclosure. Those having ordinary skills in the art will appreciate that with the evolution of the system architecture and the emergence of new application scenarios, the technical schemes provided in the embodiments of the present disclosure are also applicable to similar technical problems.

Those having ordinary skills in the art may understand that all or part of steps in the methods and the functional modules/units in the system or device disclosed above may be implemented as software, firmware, hardware, and appropriate combinations thereof.

In the hardware implementation, the division of the functional modules/units described above may not correspond to the division of physical components. For example, one physical component may have multiple functions, or one function or step may be performed jointly by several physical components. Some or all physical components may be implemented as software executed by a processor such as a central process unit, a digital signal processor or a microprocessor, or as hardware, or as an integrated circuit such as an application specific integrated circuit. Such software may be distributed on a computer-readable medium. The computer-readable medium may include a computer storage medium (or non-transitory medium) and a communication medium (or transitory medium). As is known to those having ordinary skills in the art, the term "computer storage medium" includes volatile and non-volatile, and removable and non-removable media implemented in any method or technology for storage of information (such as computer-readable instructions, data structures, program modules or other data). The computer storage medium includes, but not limited to, a Random-Access Memory (RAM), a Read-Only Memory (ROM), an Electrically Erasable Programmable Read-Only Memory (EEPROM), a flash memory or other memory technologies, a Compact Disc Read-Only Memory (CD-ROM), a Digital Versatile Disc (DVD) or other optical storages, a magnetic cassette, a magnetic tape, a magnetic disk or other magnetic storage devices, or any other media configured to store desired information and accessible by a computer. In addition, those having ordinary skills in the art know that the communication medium typically includes computer-readable instructions, data structures, program modules, or other data in a modulated data signal such as a carrier wave or other transport mechanism, and may include any information delivery media.

Terms such as "component", "module", and "system" used in this description are used to indicate computer-related entities, hardware, firmware, combinations of hardware and software, software, or software in execution. For example, a component may be, but not limited to, a process that runs on a processor, a processor, an object, an executable file, a thread of execution, a program, or a computer. As shown in figures, both an application running on a computing device and the computing device can be a component. One or more components may reside within a process or a thread in execution, and a component may be located on one computer or distributed between two or more computers. In addition, these components may be executed from various computer readable media that store various data structures. The components can communicate via local and/or remote processes such as in accordance with a signal having one or more data packets (e.g., data from one component interacting with another component in a local system, distributed system, and/or across a network, such as the Internet, with other systems via the signal).

## Claims

1. A positioning method, comprising:
acquiring parameter information of at least one Reconfigurable Intelligent Surface (RIS) and parameter information of a base station, wherein the at least one RIS comprises a first RIS;
acquiring Angle of Arrival (AOA) information corresponding to at least two signal transmission paths, wherein the at least two signal transmission paths comprise a first reflection path, the first reflection path comprising a path for signal transmission between the base station and a target terminal device via the first RIS; and
obtaining location information of the target terminal device according to the parameter information of the RIS, the parameter information of the base station, and the AOA information corresponding to the at least two signal transmission paths.

2. The positioning method of claim 1, wherein:
the at least two signal transmission paths further comprise a Line of Sight (LOS) path, the LOS path comprising a path for direct signal transmission between the base station and the target terminal device;
AOA information of the first reflection path is AOA information of the target terminal device relative to the first RIS; and
AOA information of the LOS path is AOA information of the target terminal device relative to the base station.

3. The positioning method of claim 1, wherein:
the at least one RIS further comprises a second RIS;
the at least two signal transmission paths further comprise a second reflection path, the second reflection path comprising a path for signal transmission between the base station and the target terminal device via the second RIS; and
AOA information corresponding to the first reflection path is AOA information of the target terminal device relative to the first RIS; and
AOA information corresponding to the second reflection path is AOA information of the target terminal device relative to the second RIS.

4. The positioning method of any one of claims 1 to 3, wherein:
the parameter information of the RIS comprises at least one of: array configuration information of the RIS and geographical location information of the RIS; and
the parameter information of the base station comprises at least geographical location information of the base station.

5. A positioning method, comprising:
acquiring parameter information of at least one Reconfigurable Intelligent Surface (RIS) and parameter information of a base station, wherein the at least one RIS comprises a first RIS;
sending a positioning signal, the positioning signal being transmitted to a target terminal device through at least two signal transmission paths, wherein the at least two signal transmission paths comprise a first reflection path, the first reflection path comprising a path for signal transmission between the base station and the target terminal device via the first RIS;
acquiring Angle of Arrival (AOA) information corresponding to the at least two signal transmission paths, wherein the AOA information corresponding to the at least two signal transmission paths comprises AOA information of the first reflection path; and
obtaining location information of the target terminal device according to the parameter information of the RIS, the parameter information of the base station, and the AOA information corresponding to the at least two signal transmission paths.

6. The positioning method of claim 5, wherein:
the at least two signal transmission paths further comprise a Line of Sight (LOS) path, the LOS path comprising a path for direct signal transmission between the base station and the target terminal device;
the AOA information corresponding to the first reflection path is AOA information of the target terminal device relative to the first RIS; and
AOA information corresponding to the LOS path is AOA information of the target terminal device relative to the base station.

7. The positioning method of claim 5, wherein:
the at least one RIS further comprises a second RIS;
the at least two signal transmission paths further comprise a second reflection path, the second reflection path comprising a path for signal transmission between the base station and the target terminal device via the second RIS; and
the AOA information corresponding to the first reflection path is AOA information of the target terminal device relative to the first RIS; and
AOA information corresponding to the second reflection path is AOA information of the target terminal device relative to the second RIS.

8. The positioning method of claim 5, further comprising:
obtaining a target paired beam between the base station and the RIS according to the parameter information of the RIS and the parameter information of the base station.

9. The positioning method of claim 5 or 8, further comprising:
performing beam training on the target terminal device to obtain a target paired beam between the base station and the target terminal device, and a target paired beam among the base station, the RIS, and the target terminal device.

10. A positioning method, comprising:
acquiring parameter information of at least one Reconfigurable Intelligent Surface (RIS) and parameter information of a base station, wherein the at least one RIS comprises a first RIS;
receiving a positioning signal, the positioning signal being from at least two signal transmission paths, wherein the at least two signal transmission paths comprise a first reflection path, the first reflection path comprising a path for signal transmission between the base station and a target terminal device via the first RIS;
acquiring Angle of Arrival (AOA) information corresponding to the at least two signal transmission paths, wherein the AOA information corresponding to the at least two signal transmission paths comprises AOA information corresponding to the first reflection path; and
obtaining location information of a terminal device according to the parameter information of the RIS, the parameter information of the base station, and the AOA information corresponding to the at least two signal transmission paths.

11. The positioning method of claim 10, wherein:
the at least two signal transmission paths further comprise a Line of Sight (LOS) path, the LOS path comprising a path for direct signal transmission between the base station and the target terminal device;
the AOA information corresponding to the first reflection path is AOA information of the terminal device relative to the first RIS; and
AOA information corresponding to the LOS path is AOA information of the terminal device relative to the base station.

12. The positioning method of claim 10, wherein:
the at least one RIS further comprises a second RIS;
the at least two signal transmission paths further comprise a second reflection path, the second reflection path comprising a path for signal transmission between the base station and the target terminal device via the second RIS; and
the AOA information corresponding to the first reflection path is AOA information of the terminal device relative to the first RIS; and
AOA information corresponding to the second reflection path is AOA information of the terminal device relative to the second RIS.

13. A positioning method, comprising:
acquiring, by a server, parameter information of at least one Reconfigurable Intelligent Surface (RIS) and parameter information of a base station, wherein the at least one RIS comprises a first RIS;
sending, by a base station, a positioning signal, the positioning signal being transmitted to a terminal device through at least two signal transmission paths, wherein the at least two signal transmission paths comprise a first reflection path, the first reflection path comprising a path for signal transmission between the base station and a target terminal device via the first RIS;
receiving, by the terminal device, the positioning signal;
calculating, by the base station or the terminal device, Angle of Arrival (AOA) information corresponding to the at least two signal transmission paths; and
obtaining, by the server, location information of the terminal device according to the parameter information of the RIS, the parameter information of the base station, and the AOA information corresponding to the at least two signal transmission paths.

14. The positioning method of claim 13, further comprising at least one of:
obtaining, by the base station, a target paired beam between the base station and the RIS according to the parameter information of the RIS and the parameter information of the base station; and
performing beam training on the target terminal device to obtain a target paired beam between the base station and the target terminal device, and a target paired beam among the base station, the RIS, and the target terminal device.

15. A positioning apparatus, comprising:
an acquisition module configured to acquire the following information:
parameter information of at least one Reconfigurable Intelligent Surface (RIS) and parameter information of a base station, wherein the at least one RIS comprises a first RIS; and
Angle of Arrival (AOA) information corresponding to at least two signal transmission paths, wherein the at least two signal transmission paths comprise a first reflection path, the first reflection path comprising a path for signal transmission between the base station and a target terminal device via the first RIS; and
a processing module configured to obtain location information of the target terminal device according to the parameter information of the RIS, the parameter information of the base station, and the AOA information corresponding to the at least two signal transmission paths.

16. A positioning apparatus, comprising:
an acquisition module configured to acquire the following information:
parameter information of at least one Reconfigurable Intelligent Surface (RIS) and parameter information of a base station, wherein the at least one RIS comprises a first RIS; and
Angle of Arrival (AOA) information corresponding to the at least two signal transmission paths, wherein the AOA information corresponding to the at least two signal transmission paths comprises AOA information corresponding to a first reflection path;
a sending module configured to send a positioning signal, the positioning signal being transmitted to a target terminal device through at least two signal transmission paths, wherein the at least two signal transmission paths comprise the first reflection path, the first reflection path comprising a path for signal transmission between the base station and the target terminal device via the first RIS; and
a processing module configured to obtain location information of the target terminal device according to the parameter information of the RIS, the parameter information of the base station, and the AOA information corresponding to the at least two signal transmission paths.

17. The positioning apparatus of claim 16, further comprising:
a pairing module configured to perform at least one of
obtaining a target paired beam between the base station and the RIS according to the parameter information of the RIS and the parameter information of the base station; and
performing beam training on the target terminal device to obtain a target paired beam between the base station and the target terminal device, and a target paired beam among the base station, the RIS, and the target terminal device.

18. A positioning apparatus, comprising:
an acquisition module configured to acquire the following information:
parameter information of at least one Reconfigurable Intelligent Surface (RIS) and parameter information of a base station, wherein the at least one RIS comprises a first RIS; and
Angle of Arrival (AOA) information corresponding to the at least two signal transmission paths, wherein the AOA information corresponding to the at least two signal transmission paths comprises AOA information corresponding to a first reflection path;
a receiving module configured to receive a positioning signal, the positioning signal being from at least two signal transmission paths, wherein the at least two signal transmission paths comprise the first reflection path, the first reflection path comprising a path for signal transmission between the base station and a target terminal device via the first RIS; and
a processing module configured to obtain location information of a terminal device according to the parameter information of the RIS, the parameter information of the base station, and the AOA information corresponding to the at least two signal transmission paths.

19. A positioning device, comprising:
a memory, a processor, and a computer program stored in the memory and executable by the processor;
wherein the computer program, when executed by the processor, causes the processor to perform the positioning method of any one of claims 1 to 14.

20. A computer-readable storage medium, storing computer-executable instructions which, when executed by a processor, cause the processor to perform the positioning method of any one of claims 1 to 14.

21. A computer program product, comprising a computer program or computer instructions stored in a computer-readable storage medium, a processor of a computer device reads the computer program or the computer instructions from the computer-readable storage medium which, when executed by the processor, causes the computer device to perform the positioning method of any one of claims 1 to 14.
